# EUROPEAN PATENT SPECIFICATION

(11) **EP 0 780 260 B1**
(45) Date of publication and mention of the grant of the patent: **31.08.2005**
(21) Application number: 96500159.7
(22) Date of filing: 10.12.1996
(51) Int. Cl.: B60N 2/00

(54) **Vehicle seat anchorage system**
Verankerungssystem für Fahrzeugsitze
Système de fixation pour sièges de véhicules

(30) Priority: 19.12.1995 ES 9502485
(43) Date of publication of application: 25.06.1997
(73) Proprietor: GRUPO ANTOLIN-INGENIERIA, S.A., 09007 Burgos (ES)
(72) Inventor: Duchateau, Jean, Irausa Ingenieria, S.A., 09007 Burgos (ES)
(74) Representative: Carpintero Lopez, Francisco

(56) References cited:
- EP-A- 0 500 412
- EP-A- 0 546 908
- EP-A- 0 618 102
- ES-A- 2 089 951

## Description

### OBJECT OF THE INVENTION

The present invention relates to a seat anchorage system useful in vehicles employed for various purposes, which holds the seat stable in both the operative and the folded position, eliminating noises and play and avoiding accidents to passengers seated behind.

### BACKGROUND OF THE INVENTION

Various solutions are known in the field of vehicle seats and coupling thereof to the floor of vehicles, the following being noteworthy amongst them:

One embodiment, namely European patent no. EP-A-0 546 908 claims a mobile vehicle seat having a mechanism to fix the seat to the floor, comprising a latch with a salient mounted with movement with respect to the seat, capable of being inserted in an opening in the floor, and hence when unlocked the latch may enter or leave the opening, whereas when locked the latch salient is supported on and locked under an edge of the opening. A drawback of the invention is that the locking latch is the member that ensures that the seat is fixed to the floor when in use and must therefore endure all the stresses generated on the seat.

Another embodiment, disclosed by the applicant, is described in patent of invention no. ES 2 089 951, claiming a system for quick mounting/dismounting of seats or other accessories, which consists of a mechanism comprising two bolts interlocked by means of a shear articulation, each of which extends into a catch and hence when an actuating handle is pulled up said catches retract and may cross a window provided in a base plate fixable to the floor, whereas when the handle is pushed down, the catches move away from each other and are locked against the underside of the platform.

The drawback of the solutions described is that when the latch or latches are not in the locked position, the seat is not fixed to the floor and may be removed from its position, but moreover if the latch is accidentally actuated when the vehicle is moving, the seat will have no anchorage and important accidents may ensue.

Furthermore, since anchorage is carried out with mobile parts, there is frequently play between the same which therefore results in cumbersome noises whilst the vehicle is moving.

European Patent EP-A1-0 500 412 discloses the preamble of claim 1 and reveals a removable vehicle seat which can be immobilised alternatively in the use position and in a position tipped forward. The armature of the seat may tip on two transverse rods aligned with the floor. A lock associated with each of the notches pivots on the armature and comprises a lower notch to ensure automatic unlocking in the inclined position.

The principal difference between prior art and the present invention can be seen in obtaining a folded seat position which in the present invention is independent from the anchorage system.

### DESCRIPTION OF THE INVENTION

The present invention fully solves the drawbacks aforesaid, providing an anchorage system that allows the seat to be kept fixed when in use without having to move parts, bolts or latches, concurrently eliminating the usual noises and play. The system proposed also allows the seat to be kept stabilised when folded, thus avoiding accidental damages to passengers seated behind.

The seat in accordance with the proposed anchorage system is attached to two bars provided to such end on the floor of the vehicle, the leg of the seat, a first and a second pawl members contributing to anchorage to said bars.

The leg of the seat is provided at its anchorage end with a profile that allows the same to be supported at all times on said bars, each of its ends being provided with projections which contribute to the support of the seat in its two essential positions, namely folded in the upright position or supported on the floor in the operative position.

For its part, the first pawl member has a pair of grooves designed to be fitted on the bars attached to the floor, being articulately fixed to the leg of the seat and thus once fitted on the bars said pawl member cannot move, though the leg of the seat can however turn relative to the same.

Finally, the second pawl has a housing designed to be fitted on one of the holding bars, and is linked to the first pawl member by means of a spring that holds the relative position between both parts at all times.

These three parts allow the seat to be kept fixed in any position, the manner in which the seat is supported on the bars and the parts involved in such support being different in each position.

Now, therefore, when folded in the upright position, the seat is supported on the bars with the assistance of the leg of the seat, which prevents a backward movement of the seat, and the first pawl member, which prevents an upward and forward movement. Once the seat is fitted in position, the second pawl member prevents the seat from turning backward, avoiding possible accidents to passengers seated behind. This is achieved by a spring arranged between the second and first pawl members, which causes both parts to be biased at all times and pressed against the supporting bars, and thus the bias of said spring needs must be overcome in order to fold the seat. This is also why no noises nor play ensue between the parts involved in the anchorage.

In the operative position of the seat, i.e. ready to be sat on, the leg of the seat prevents an upward or forward movement of the seat, whereas the first pawl member prevents an upward, forward and backward movement, the leg of the seat having a stop that abuts against the first pawl member, which remains fixed, once the seat reaches the operative position, thus preventing the leg of the seat from travelling beyond such position.

In accordance with the construction described, the seat would operate as follows:
- The seat is positioned upright on the anchorage bars until the grooves of the first and second pawl members are fitted on the bars. In this position the seat is already fixed, and cannot be removed without actuating the second pawl with the actuating lever, making the second pawl pivot until its groove is released from the anchorage bar. The position is perfectly stable unless the second pawl is actuated, for the coil spring arranged between both members holds them tightly against the bars at all times, preventing them from becoming detached from their anchorage position and the seat from falling backward due to its own weight.
- In order for the seat to be folded, sufficient strength must be exerted to overcome the bias of said spring, which strength causes the leg of the seat to slide on the anchorage bars until the stop on the leg of the seat abuts against the first pawl member, the rear anchorage bar being fitted in such position in a hook-shaped housing provided in the leg proper. In this position, the seat is fixed by means of the first pawl member and the leg of the seat, and the second pawl is not involved in the anchorage. This prevents the seat from becoming detached due to faulty or accidental manipulations of the second pawl, causing accidents.

In order for the seat to be removed, as aforesaid, it is necessary to take it to the upright folded position and then actuate the second pawl by means of the actuating lever to release it from its anchorage on the rear bar.

### DESCRIPTION OF THE DRAWINGS

In order to provide a fuller description and contribute to the complete understanding of the features of this invention, a set of drawings is attached to the specification which, while purely illustrative and not fully comprehensive, shows the following:

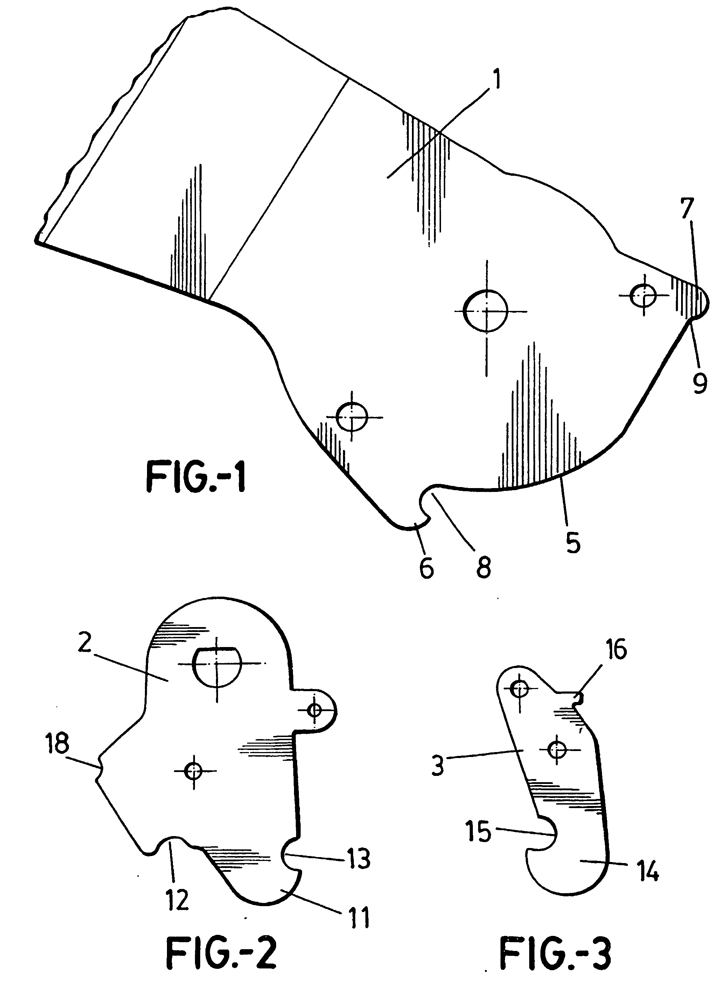

Figure 1.- Shows the anchorage end of the leg of the seat.
Figure 2.- Shows the first pawl member.
Figure 3.- Shows the second pawl member.

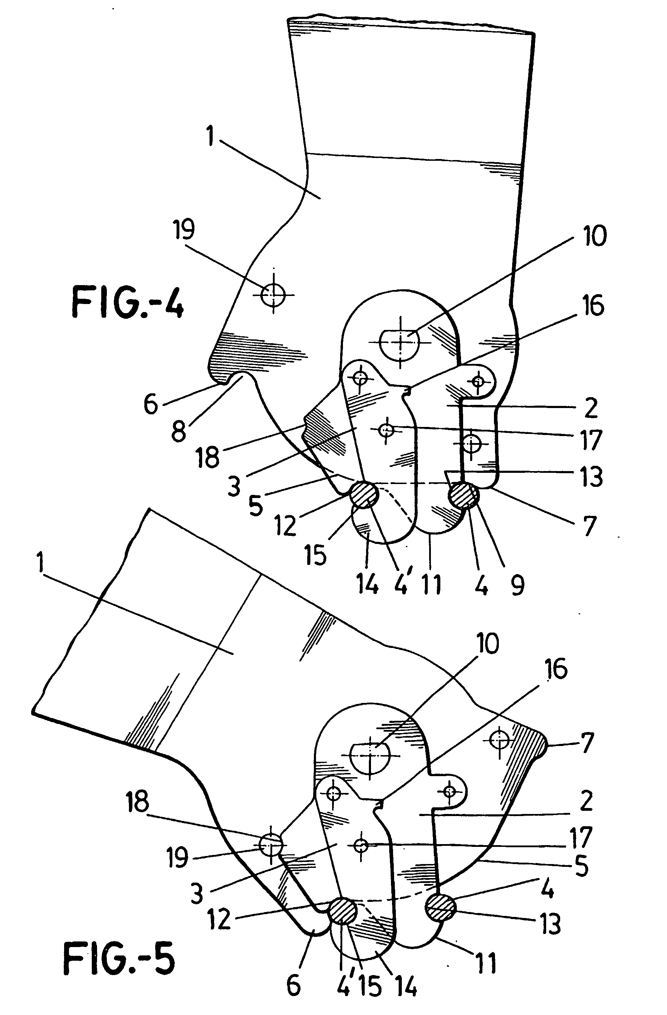

Figure 4.- Shows the arrangement of the first and second pawls and the leg of the seat with respect to the anchorage bars with the seat upright.
Figure 5.- Shows the arrangement of the first and second pawl members, and the leg of the seat with respect to the anchorage bars with the seat folded.

### PREFERRED EMBODIMENT OF THE INVENTION

With reference to the figures, in the proposed system the seat is anchored by the joint action of the leg (1) of the seat, a first pawl (2) and a second pawl (3) that are fitted on two bars, a front (4) and a rear (4') bar, provided in a hole of the supporting surface or floor of the vehicle.

The leg (1) extends at its ends into two projections (6) and (7) each forming a groove or housing (8) and (9) designed to be fitted on the bars (4) or (4'), thereby delimiting the maximum permissible travel of the leg, corresponding with the folded and sitting position of the seat, a curved profile (5) being provided between both projections designed to ensure contact with the bars (4) and (4') during transition of the leg between the two extreme positions of the seat.

The first pawl member (2) is related to the leg (1) through a pin (10) that allows both members to turn about each other. This first pawl member (2) has a bottom projection (11) entering a hole () in the supporting surface and is supported and fitted on the bars (4) and (4') by means of two grooves (12) and (13) of roughly semi-circular shape.

The second pawl member (3) is provided with a hook-shaped projection (14) defining a groove (15) designed to be fitted on the rear anchorage bar (4'). The existence of a small projection or salient (16) is also provided, to be actuated by an actuating lever that causes the first pawl member (2) to pivot about the pin (17), thereby for the connection between the groove (15) and the rear bar (4') to be released.

Finally, the existence of a coil spring is provided arranged between the first pawl member (2) and the second pawl (3), designed for the projection (14) of the second pawl to be kept pressed against the rear bar (4') while the projection (11) of the first pawl member 2 is pressed against the front bar (4), thereby ensuring a fit between these parts and the anchorage bars and hence of the seat overall, noise and play between the parts being also eliminated.

Now, therefore, when in an upright coupled and uncoupled position, the seat is fixed to the bars providing anchorage on the floor, with the assistance of the three members (1), (2) and (3) and particularly the groove (13) of the first pawl member (2), with the assistance of the leg (1) projection (7), is fitted on the front bar (4), preventing upward and forward movement of the seat. For its part, with the assistance of the second pawl (3), the groove (12) on the first pawl member (2) is fitted on the rear bar (4') to prevent a backward and upward movement of the seat.

The second pawl member (3) serves no function in the operative position of the seat, thereby avoiding the possibility of the seat being set loose by accidentally actuating the pawl actuating lever. Fixing of the seat in this position is assured by the first pawl member and the actual leg of the seat. In particular, this anchorage is achieved by fitting the groove (8) of the projection (6) of the leg (1) and the groove (12) of the first pawl member on the rear bar (4') whereas anchorage on the front bar (4) is achieved by means of the groove (13) of the first pawl member (2).

Transition between both positions is achieved by pushing the seat with sufficient strength to overcome the coil spring bias that tends to keep it vertical, which strength causes the seat to pivot to the operative position, with the leg profile (5) sliding whilst the seat is pivoting, on the anchorage bars (4) and (4') until the stop () on the leg abuts against the first pawl member (2), preventing a further pivoting of the leg about the rear bar (4').

## Claims

1. A vehicle seat anchorage system, of the kind supported on the floor by means of bars, and pawls having grooves designed to be respectively fitted on said bars **characterised in that** anchorage on said bars takes place with the assistance of a first pawl member (2) and a second pawl member (3) and the leg (1) proper of the seat, the first pawl member (2) having two grooves (12) and (13) designed to be respectively fitted on the bars (4) and (4') and therefore, in the operative position of the seat, the same is anchored with the assistance of a projection (6) of the leg (1) and the groove (8) defined between such projection and the profile (5) of said leg, which is fitted on the bar (4'), the seat being thus held still irrespective of the position of the second pawl (3), whereas in the folded seat position, the seat is held fixed with the assistance of the leg (1), by means of a projection (7) that is supported on the bar (4), and the second pawl member (3), which is fitted on the bar (4') by means of a hook (14), a coil spring being provided arranged between the first (2) and the second (3) pawl members to keep both respectively pressed against the bars (4) and (4'), in order for the seat to be held stably in the folded position, preventing the seat from turning backward to its operative position.

2. A vehicle seat anchorage system, as in claim 1, **characterised in that** the second pawl member (3) is provided with a salient actuated by a manually actionable lever, and thus upon said lever being pushed, the second pawl member (3) turns about its pin (17), causing the groove (15) of the second pawl (3) to become detached from the bar (4) to allow the seat to be removed when it is in the folded position.

3. A vehicle seat anchorage system, as in preceding claims, **characterised in that** the first pawl member (2) has a projection () designed to abut against a stop () provided on the leg (1) to define the limiting displacement of said leg (1) whilst the seat is moving from the folded to the operative position.

4. A vehicle seat anchorage system, as in preceding claims, **characterised in that** the leg (1) has a curved profile (5) at its lowermost end in order to ensure contact with and support of such leg on the bars (4) and (4') at all times, expediting transition between the folded and the operative position.

5. A vehicle seat anchorage system, as in preceding claims, **characterised in that** once the first pawl member (2) is arranged in its working position, fitted on the bars (4) and (4'), it is held fixed, fitted on bars (4) and (4'), by action of the coil spring, whereas the leg (1) may turn about said first pawl member (2) to be adapted to the different seat positions.

6. A vehicle seat anchorage system, as in preceding claims, **characterised in that** the groove (13) of the first pawl member (2) is roughly semi-circular in shape, with the opening directed in such a way as to fit on the rear of the bar (4), preventing the upward and forward movement of the seat in both the folded and the operative position.

## Patentansprüche

1. Fahrzeugsitzverankerungssystem des Typs, der am Boden mittels Stangen und Sperrklinken, die so ausgebildet sind, dass sie jeweils auf die Stangen passen, getragen wird, **dadurch gekennzeichnet, dass** die Verankerung auf den Stangen unter Zuhilfenahme eines ersten Sperrklinkenelements (2) und eines zweiten Sperrklinkenelements (3) und dem zum Sitz gehörenden Bein (1) durchgeführt wird, wobei das erste Sperrklinkenelement (2) zwei Kerben (12,13) aufweist, die so ausgeführt sind, dass sie jeweils auf die Stangen (4,4') passen, und wobei hierfür in der Betriebsposition des Sitzes dieser verankert ist unter Zuhilfenahme eines Vorsprungs (6) des Beines (1) und der Kerbe (8), die zwischen diesem Vorsprung und dem Profil (5) des Beines, das auf der Stange (4') befestigt ist, definiert ist, wobei der Sitz auf diese Weise trotzdem unabhängig von der Position der zweiten Sperrklinke (3) gehalten wird, wohingegen in der gefalteten Sitzposition der Sitz fest gehalten wird unter Zuhilfenahme des Beines (1) mittels eines Vorsprungs (7), der von der Stange (4) getragen wird, und dem zweiten Sperrklinkenelement (3), dass auf der Stange (4') mittels eines Haken (24) befestigt ist, wobei eine Schraubenfeder vorgesehen ist, die zwischen dem ersten (2) und dem zweiten (3) Sperrklinkenelement angeordnet ist, um beide jeweils gegen die Stangen (4,4') gedrückt zu halten, damit der Sitz stabil in der gefalteten Position gehalten wird und verhindert wird, dass der Sitz sich in seine Betriebsposition nach hinten zurückbewegt.

2. Fahrzeugsitzverankerungssystem nach Anspruch 1, **dadurch gekennzeichnet, dass** das zweite Sperrklinkenelement (3) mit einer Ausbuchtung versehen ist, die durch einen manuell bedienbaren Hebel betätigt wird, so dass, wenn der Hebel gedrückt wird, das zweite Sperrklinkenelement (3) um seinen Bolzen (17) dreht, wodurch die Kerbe (15) der zweiten Sperrklinke (3) von der Stange (4) gelöst wird, um zu ermöglichen, dass der Sitz, wenn er in der gefalteten Position ist, zurückbewegt werden kann.

3. Fahrzeugsitzverankerungssystem nach einem der vorangehenden Ansprüche, **dadurch gekennzeichnet, dass** das erste Sperrklinkenelement (2) einen Vorsprung hat, der so ausgebildet ist, dass er gegen einen auf dem Bein (1) vorgesehenen Anschlag anstößt, um die begrenzte Verschiebung des Beines (1) zu definieren, während der Sitz von der gefalteten in die Betriebsposition bewegt wird.

4. Fahrzeugsitzverankerungssystem nach einem der vorangehenden Ansprüche, **dadurch gekennzeichnet, dass** das Bein (1) ein gebogenes Profil (5) an seinem unteren Ende hat, damit zu jeder Zeit ein Kontakt mit und das Tragen dieses Beines auf den Stangen (4,4') gewährleistet ist, um die Verlagerung zwischen der gefalteten und der Betriebsposition zu fördern.

5. Fahrzeugsitzverankerungssystem nach einem der vorangehenden Ansprüche, **dadurch gekennzeichnet, dass**, sobald das erste Sperrklinkenelement (2) in seiner Arbeitsposition angeordnet ist, wobei es auf den Stangen (4,4') befestigt ist, es fest gehalten wird, wobei es durch die Einwirkung der Schraubenfeder auf den Stangen (4,4') befestigt ist, wohingegen das Bein (1) um das erste Sperrklinkenelement (2) schwenken kann, um an die verschiedenen Sitzpositionen angepasst zu werden.

6. Fahrzeugsitzverankerungssystem nach einem der vorangehenden Ansprüche, **dadurch gekennzeichnet, dass** die Kerbe (13) des ersten Sperrklinkenelements (2) grob dle Form eines Halbkreises hat, wobei die Öffnung derart ausgebildet ist, dass sie auf den hinteren Teil der Stange (4) passt, um eine nach oben gerichtete und nach vorne gerichtete Bewegung des Sitzes sowohl in der gefalteten als auch in der Betriebsposition zu verhindern.

## Revendications

1. Système d'accrochage de siège de véhicule du type porté au plancher par l'intermédiaire de barres (17) et de griffes ayant des gorges destinées à s'adapter respectivement aux barres, **caractérisé en ce que** l'accrochage sur les barres se fait avec l'assistance d'un premier élément de griffe (2) et d'un second élément de griffe (3) et la branche (1) appartenant au siège, le premier élément de griffe (2) ayant deux gorges (12, 13) destinées à se monter respectivement sur les barres (4, 4') et donc, en position d'utilisation, le siège est accroché grâce à une saillie (6) de la branche (1) et de la gorge (8) définie entre cette saillie et le profil (5) de la branche monté sur la barre (4'), le siège étant ainsi tenu immobile quelle que soit la position de la seconde griffe (3), alors qu'en position repliée le siège est maintenu fixe avec l'assistance de la branche (1) par l'intermédiaire d'une partie en saillie (7) portée par la barre (4), et du second élément de griffe (3) installé sur la barre (4') par l'intermédiaire d'un crochet (14), un ressort hélicoïdal (27) étant installé entre le premier et le second élément de griffe (2, 3) pour maintenir ces deux éléments pressés contre les barres (4, 4'), afin de tenir le siège de manière stable en position pliée en évitant que le siège ne revienne en position d'utilisation.

2. Système d'accrochage de siège de véhicule selon la revendication 1, **caractérisé en ce que** le second élément de griffe (3) comporte un moyen en saillie commandé par un levier manoeuvrable et ainsi lorsque le levier est poussé, le second élément de griffe (3) tourne autour de sa broche (17) de façon à dégager la gorge (15) du second élément de griffe (3) par rapport à la barre (4) et permettre d'enlever le siège lorsqu'il est en position pliée.

3. Système d'accrochage de siège de véhicule selon les revendications précédentes, **caractérisé en ce que** le premier élément de griffe (2) comporte une saillie destinée à venir contre une butée prévue sur la branche (1) pour définir les limites de déplacement de la branche (1) lorsque le siège passe de la position pliée à la position d'utilisation.

4. Système d'accrochage de siège de véhicule selon les revendications précédentes, **caractérisé en ce que** la branche (1) a un profil courbe (5) à son extrémité inférieure pour assurer le contact avec la branche et la porter sur les barres (4, 4') pendant tout le temps de passage entre la position pliée et la position d'utilisation.

5. Système d'accrochage de siège de véhicule selon l'une quelconque des revendications précédentes, **caractérisé en ce que** lorsque le premier élément de griffe (2) est en position de travail, installé sur les barres (4, 4'), il est maintenu bloqué sur les barres (4, 4') par l'action du ressort hélicoïdal alors que la branche (1) peut tourner autour du premier élément de griffe (2) pour s'adapter aux différentes positions du siège.

6. Système d'accrochage de siège de véhicule selon l'une quelconque des revendications précédentes, **caractérisé en ce que** la gorge (13) du premier élément de griffe (2) a une forme globalement semi-circulaire, l'ouverture étant dirigée de façon à s'adapter sur l'arrière de la barre (4) évitant le mouvement de soulèvement et d'avancement du siège en position pliée et en position d'utilisation.
